# EUROPÄISCHE PATENTANMELDUNG

(11) **EP 2 838 121 A1**
(43) Veröffentlichungstag der Anmeldung: **18.02.2015**
(21) Anmeldenummer: 13004020.7
(22) Anmeldetag: 13.08.2013
(51) Int. Cl.: H01L 31/042

(54) **Solarmoduleinrichtung**

(71) Anmelder: Hugo Brennenstuhl GmbH & Co. KG, 72074 Tübingen (DE)
(72) Erfinder: Brennenstuhl, Hugo, 72074 Tübingen (DE)
(74) Vertreter: Vogler, Bernd

(57) **Zusammenfassung**

Bei einer Solarmoduleinrichtung, mit wenigstens einem Solarmodul (12), das einen Tragrahmen (14) und mehrere durch den Tragrahmen (14) gehalterte Solarzellen (13) aufweist, und mit einer dem Tragrahmen (14) zugeordneten Konsole (16) zur Halterung des Solarmoduls (12), ist die Konsole (16) mittels Lagermitteln am Tragrahmen (14) gelagert, derart, dass die Konsole (16) zwischen einer vom Tragrahmen (14) wegragenden Gebrauchsstellung (17) und einer an den Tragrahmen (14) herangeklappten Verstaulage (18) verstellbar ist.

## Beschreibung

Die Erfindung betrifft eine Solarmoduleinrichtung, mit wenigstens einem Solarmodul, das einen Tragrahmen und mehrere durch den Tragrahmen gehalterte Solarzellen aufweist, und mit einer dem Tragrahmen zugeordneten Konsole zur Halterung des Solarmoduls.

Solarmodule, die auch als Solarpanele bezeichnet werden können, bestehen in der Regel aus einem Tragrahmen, in den eine Vielzahl von Solarzellen eingepasst sind. Das Solarmodul ist insgesamt plattenartig ausgestaltet, ist also in der Regel ein flacher Körper, wodurch der Bedarf besteht, es mit einer Solarmodul-Aufständerung in eine optimal geneigte Lage zu bringen, in der die Sonneneinstrahlung in einem optimalen Winkel auf die Solarzellen trifft. Insbesondere bei der Bodenaufstellung aber auch bei der Wandbefestigung definiert die Aufständerung den Neigungswinkel des Solarmoduls.

Hierzu sind aus dem Stand der Technik bereits Konsolen bekannt, die in einem ersten Schritt zusammengebaut werden und im zusammengebauten Zustand eine Auflagefläche für das Solarmodul bereitstellen.

Allerdings sind die aus dem Stand der Technik bekannten Konsolen sperrig, ggf. schwer und der Zusammenbau ist in der Regel zeitintensiv.

Aufgabe der Erfindung ist es daher, eine Solarmoduleinrichtung der eingangs erwähnten Art zu schaffen, die schnell und einfach, ohne großen Montageaufwand in die Gebrauchsstellung gebracht werden kann.

Diese Aufgabe wird durch eine Solarmoduleinrichtung mit den Merkmalen des unabhängigen Anspruchs 1 gelöst. Weiterbildungen der Erfindung sind in den Unteransprüchen dargestellt.

Die erfindungsgemäße Solarmoduleinrichtung zeichnet sich dadurch aus, dass die Konsole mittels Lagermitteln am Tragrahmen gelagert ist, derart, dass die Konsole zwischen einer vom Tragrahmen wegragenden Gebrauchsstellung und einer an den Tragrahmen herangeklappten Verstaulage verstellbar ist.

Durch die am Tragrahmen gelagerte Konsole entfällt der Bedarf, dass die Konsole zunächst zusammengebaut oder bei Bedarf demontiert werden muss. Durch einfaches und schnell durchführbares Herausklappen lässt sich die Konsole in die Gebrauchsstellung bringen, womit die Solarmoduleinrichtung im Falle einer Bodenaufstellung bereits einsatzbereit ist. Bei Bedarf kann die Konsole wieder in die Verstaulage am Tragrahmen herangeklappt werden, wodurch sich insbesondere für den Transport oder für Lagerzwecke eine optimale, platzsparende Größe der Solarmoduleinrichtung ergibt.

Die Konsole ist als Standgestell für eine Aufstellung der Solarmoduleinrichtung auf dem Boden geeignet. Darüber hinaus eignet sich die Konsole auch für die Wandbefestigung der Solarmoduleinrichtung. In der Gebrauchsstellung ist das Solarmodul schräg mit einem Neigungswinkel gegenüber dem Untergrund, also Boden oder Wand, ausgerichtet.

Bei einer Weiterbildung der Erfindung weist die Konsole in der Gebrauchsstellung winkelig zueinander angeordnete, alternativ nutzbare Abstützabschnitte zur Abstützung der Konsole an einer Abstützfläche auf. Es ist also beispielsweise möglich, die Konsole und damit das Solarmodul wahlweise auf der einen oder der anderen Abstützfläche abzustellen, falls eine Bodenaufstellung beabsichtigt ist oder an der einen oder anderen Abstützfläche an der Wand zu befestigen.

Bei einer Weiterbildung der Erfindung sind von den Abstützabschnitten ein erster Abstützabschnitt über die Lagermittel an einer ersten Lagerschnittstelle am Tragrahmen und ein zweiter Abstützabschnitt über die Lagermittel an einer von der ersten Lagerschnittstelle entfernten zweiten Lagerschnittstelle gelagert.

Ein besonderer Vorteil ergibt sich, falls die Abstützabschnitte unterschiedlich lang ausgebildet sind, also voneinander verschiedene Längen aufweisen. Je nachdem welcher der beiden Abstützabschnitte benutzt wird, ergibt sich sowohl bei der Bodenaufstellung als auch bei der Wandbefestigung jeweils ein anderer Neigungswinkel für das Solarmodul. Der Neigungswinkel ist der Winkel, der zwischen der Oberfläche des Solarmoduls und dem Untergrund, insbesondere Wand oder Boden, aufgespannt wird. Es ist also möglich, in einfacher und schneller Weise den Neigungswinkel des Solarmoduls zu ändern, indem wahlweise die eine oder die andere Abstützfläche genutzt wird. Steht das Solarmodul beispielsweise auf dem längeren Abstützabschnitt, so ist der Neigungswinkel kleiner als bei der Aufstellung auf dem kürzeren Abstützabschnitt.

Der Aufstellwinkel bzw. Befestigungswinkel des Solarmoduls lässt sich jedoch auch durch eine andere Maßnahme verändern. In besonders bevorzugter Weise sind die Lagermittel derart ausgebildet, dass sich die Winkellage der Abstützabschnitte zueinander ändern lässt.

In besonders bevorzugter Weise ist die Konsole aus Profilelementen aufgebaut. Zweckmäßigerweise handelt es sich bei den Profilelementen um Hohlprofile, wodurch das Gewicht der Konsole relativ gering ist. Bei den Profilelementen handelt es sich bevorzugt um Rohrprofile, insbesondere aus Metallmaterial. Alternativ ist es möglich, dass die Profilelemente Vollprofile sind. Die Profilelemente können auch aus Kunststoffmaterial bestehen.

Bei einer weiterbildung der Erfindung ist die Konsole mehrteilig aus mehreren Konsolenteilen aufgebaut, wobei die Konsolenteile in der Verstaulage voneinander getrennt und an den Tragrahmen herangeklappt sind, während sie in der Gebrauchsstellung ausgeklappt und mittels Verbindungsmitteln miteinander verbunden sind. Die Trennung der Konsolenteile in der Verstaulage erlaubt eine besonders platzsparende Unterbringung am Tragrahmen. Die Konsolenteile können beispielsweise aneinander vorbei geklappt und nebeneinander am Tragrahmen zu liegen kommen.

In besonders bevorzugter Weise sind die Verbindungsmittel als Steckverbindungsmittel ausgebildet, über die sich einander zugeordnete freie Enden der Konsolenteile zusammenstecken lassen. Eine derartige, mittels Steckverbindungsmittel gebildete Steckverbindung zwischen den Konsolenteilen lässt sich in besonders einfacher Weise herstellen. Alternativ wäre jedoch auch eine Klapp- oder Rastverbindung denkbar.

Im Falle von aus Rohprofilen ausgebildeten Konsolenteilen ist zweckmäßigerweise eines der beiden einander zugeordneten freien Enden der Konsolenteile in das andere freie Ende einsteckbar.

In besonders bevorzugter Weise weisen die Lagermittel pro Lagerschnittstelle wenigstens eine am Tragrahmen ausgebildete Lagerbohrung und wenigstens ein durch die Lagerbohrung hindurchführbares und an einem Lagerende des zugeordneten Konsolenteils lösbar fixierbares Feststellelement auf. Zweckmäßigerweise besitzt die erste und/oder die zweite Lagerschnittstelle mehrere Lagerbohrungen, die alternativ nutzbar sind. Dadurch ist es möglich, das zu fixierende Lagerende des Konsolenteils wahlweise der einen oder der anderen Lagerbohrung zuzuordnen und mit dem entsprechend dort positionierten Feststellelement zu fixieren. Durch diese Maßnahme ist in einfacher Weise eine Änderung des Neigungswinkels des Solarmoduls durchführbar.

Bei einer Weiterbildung der Erfindung ist der Tragrahmen aus mehreren Rahmenabschnitten gebildet ist, an denen an zwei einander gegenüberliegenden Rahmenabschnitten jeweils eine erste und eine zweite Lagerschnittstelle angeordnet sind, wobei jedem der mit den Lagerschnittstellen ausgestatteten Rahmenabschnitten eine aus jeweils zwei einander zugeordneten Konsolenteilen gebildete Konsolenhälfte der Konsole zugeordnet ist.

Die Konsole besteht also zweckmäßigerweise aus Konsolenteilen, die in zwei Konsolenhälften gruppiert sind. Dabei bilden zweckmäßigerweise die dem linken Rahmenabschnitt zugeordneten Konsolenteile die linke Konsolenhälfte, während die dem rechten Rahmenabschnitt zugeordneten Konsolenteile die rechte Konsolenhälfte bilden.

Bei einer Weiterbildung der Erfindung sind der Konsole Beschwerungsmittel zur Erhöhung der Standfestigkeit zugeordnet.

Es ist möglich, dass die Beschwerungsmittel eine auf den zur Abstützung genutzten Abstützabschnitt auflegbare oder dort befestigbare Beschwerungsplatte umfassen.

Alternativ oder zusätzlich ist es möglich, dass die Beschwerungsmittel eine an der Konsole befestigbare Unterlage aufweisen, die mit Schüttgut und/oder Beschwerungselementen, beispielsweise Steinbrocken, beladbar ist.

Bei einer Weiterbildung der Erfindung weist die Konsole Befestigungsmittel zu deren hängenden Befestigung an einer Montagefläche und/oder Fixierung an einer unbefestigten Bodenfläche auf. Die Befestigungsmittel können beispielsweise mehrere in den Konsolenteilen eingebrachte Montagebohrungen und hierzu zugeordnete Befestigungsschrauben umfassen, wodurch die Konsole an einer beispielsweise als Wand ausgebildeten Montagefläche befestigt werden kann. Die Montagebohrungen können auch zum Durchstecken von Heringen dienen, so dass eine zuverlässige Fixierung an einer unbefestigten Bodenfläche, beispielsweise Erdreich, möglich ist.

Bevorzugte Ausführungsbeispiele der Erfindung sind in der Zeichnung dargestellt und werden im Folgenden näher erläutert. In der Zeichnung zeigen:
- Figur 1: eine perspektivische Vorderansicht auf ein erstes Ausführungsbeispiel der erfindungsgemäßen Solarmoduleinrichtung,
- Figur 2: die Solareinrichtung von Figur 1 in einer Perspektive von schräg hinten,
- Figur 3: eine Rückansicht auf die Solarmoduleinrichtung von Figur 1,
- Figur 4: eine Seitenansicht auf die Solarmoduleinrichtung von Figur 1 bei der Bodenaufstellung und Nutzung des langen Abstützabschnitts,
- Figur 5: eine Seitenansicht der Solarmoduleinrichtung von Figur 1 bei der Bodenaufstellung bei Nutzung des kürzeren Abstützabschnitts,
- Figur 6: eine Seitenansicht der Solarmoduleinrichtung von Figur 1 bei der Wandbefestigung und Nutzen des längeren Abstützabschnitts,
- Figur 7: eine Rückansicht auf das Solarmodul ohne Konsole,
- Figur 8: eine Seitenansicht auf das Solarmodul, insbesondere den Tragrahmen, ohne Konsole,
- Figur 9: eine perspektivische Ansicht von vorne auf die Solarmoduleinrichtung von Figur 1 bei geändertem Neigungswinkel durch Änderung der Winkellage der Konsolenteile,
- Figur 10: eine perspektivische Ansicht von schräg hinten auf die Solarmoduleinrichtung von Figur 9,
- Figur 11: eine Rückansicht auf die Solarmoduleinrichtung von Figur 9,
- Figur 12: eine Seitenansicht auf die Solarmoduleinrichtung von Figur 9 bei der Bodenaufstellung und Nutzen des längeren Abstützabschnitts,
- Figur 13: eine Draufsicht auf ein erstes Konsolenteil der Konsole,
- Figur 14: eine Draufsicht auf ein zweites Konsolenteil der Konsole,
- Figur 15: eine perspektivische Ansicht von schräg hinten auf das Solarmodul von Figur 1, wobei sich die Konsole in der Verstaulage befindet,
- Figur 16: eine perspektivische Ansicht von schräg hinten auf ein zweites Ausführungsbeispiel der erfindungsgemäßen Solarmoduleinrichtung,
- Figur 17: eine perspektivische Ansicht von schräg hinten auf ein drittes Ausführungsbeispiel der erfindungsgemäßen Solarmoduleinrichtung,
- Figur 18: eine perspektivische Ansicht von schräg hinten auf ein viertes Ausführungsbeispiel der erfindungsgemäßen Solarmoduleinrichtung,

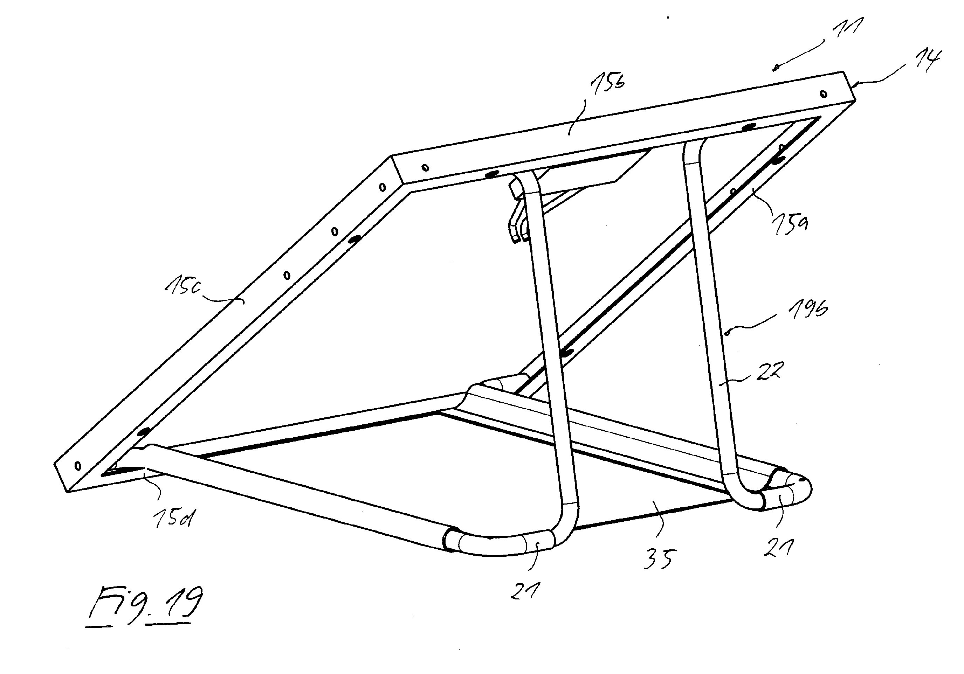

- Figur 19: eine perspektivische Ansicht von schräg hinten auf das dritte Ausführungsbeispiel der erfindungsgemäßen Solarmoduleinrichtung und
- Figur 20: eine perspektivische Ansicht von schräg hinten auf das Solarmodul von Figur 1 bei voneinander getrennten Konsolenteilen, die jedoch bereits vom Tragrahmen herausgeklappt sind.

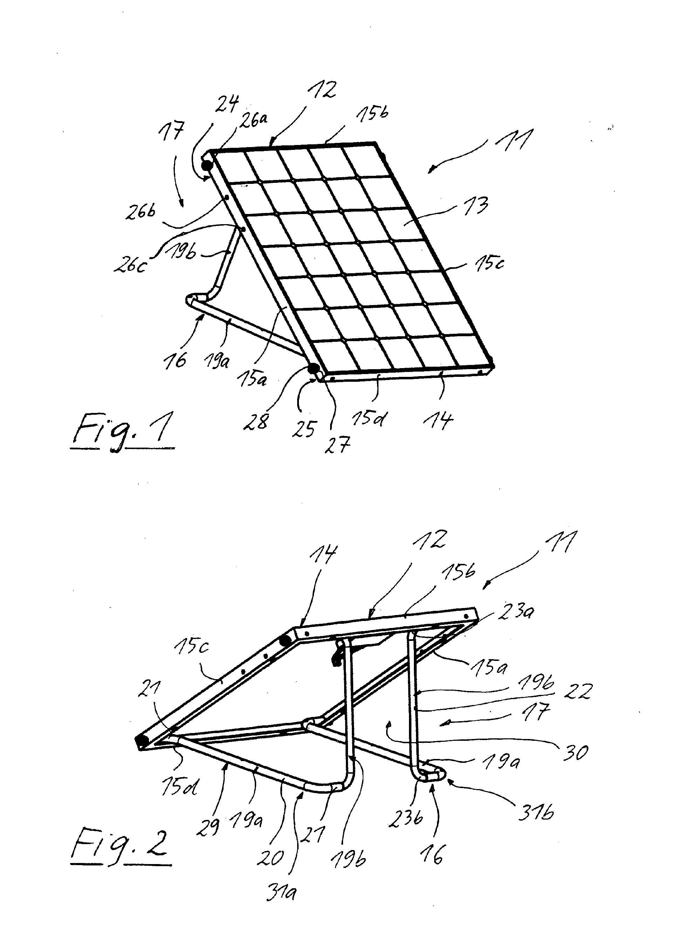

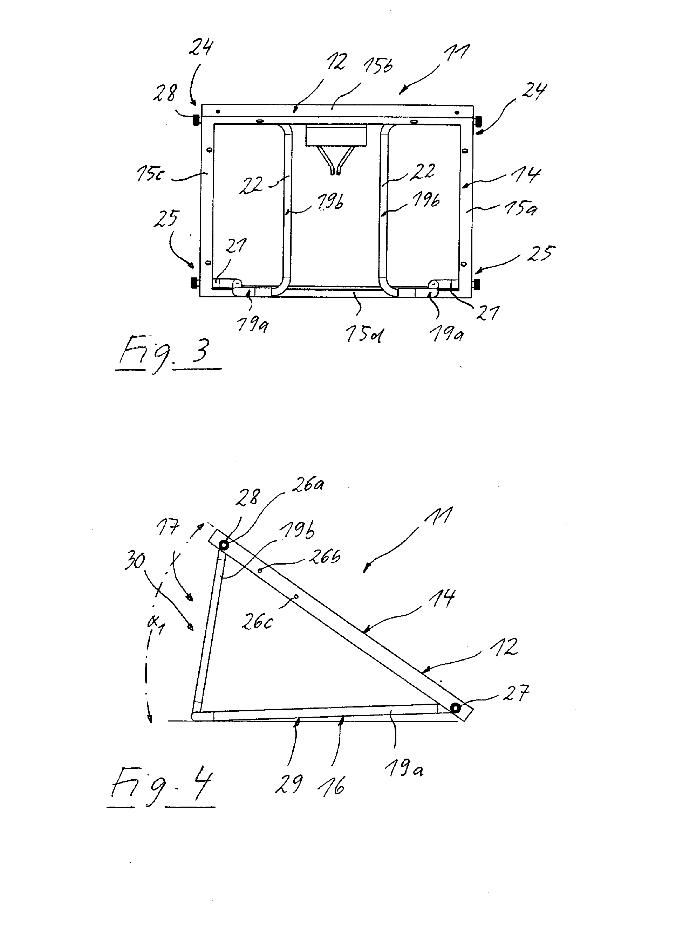

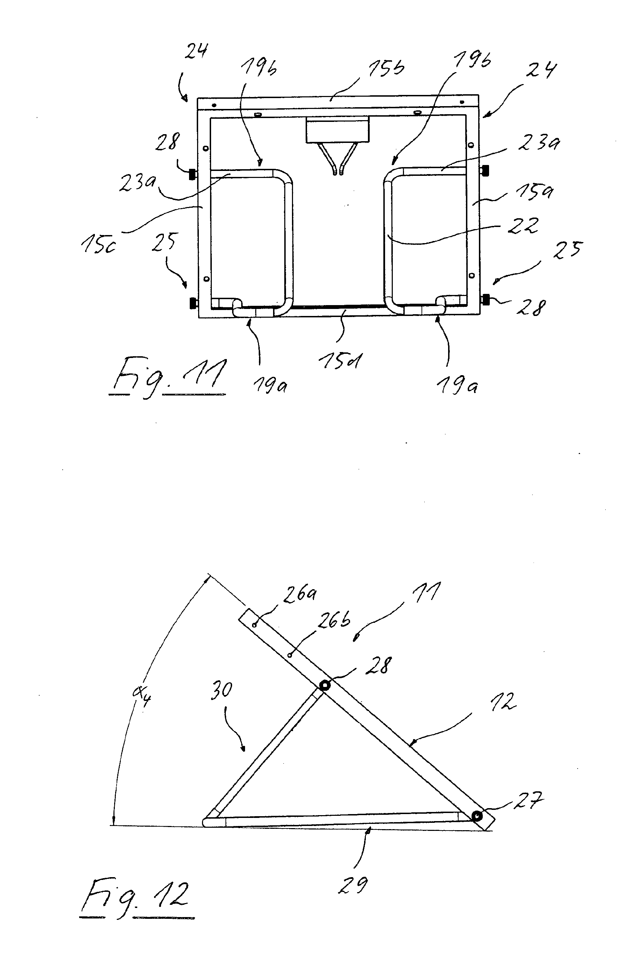

Die Figuren 1 bis 15 zeigen ein erstes Ausführungsbeispiel der erfindungsgemäßen Solarmoduleinrichtung 11. Die Solarmoduleinrichtung 11 besitzt wenigstens ein Solarmodul 12, das auch als Solarpanel bezeichnet werden kann. Das Solarmodul 12 besteht aus mehreren Solarzellen 13. Die Solarzellen 13 sind in der Lage, durch den photoelektrischen Effekt Sonnenlicht direkt in elektrische Energie umzuwandeln.

Bei den Solarzellen kann es sich um Dickschicht- und/oder Dünnschichtzellen handeln. Im Falle von Dickschichtzellen kann es sich beispielsweise um monokristalline Siliziumzellen oder um polykristalline Zellen handeln. Im Falle von Dünnschichtzellen kommen beispielsweise amorphes Silizium oder auch kristallines Silizium als Material in Frage.

Indem in den Figuren 1 bis 15 dargestellten Beispielsfall umfasst die Solarmoduleinrichtung 11 ein einzelnes Solarmodul 12. Es wäre selbstverständlich auch denkbar, dass die Solarmoduleinrichtung 11 mehrere Solarmodule 12 umfasst.

Die Solarmoduleinrichtung 11 wird derart positioniert, dass das Solarmodul 12 die größtmögliche Ausbeute an Energie bereitstellt. Solarmodule 12 lassen sich beispielsweise an Dachflächen anbringen. Die erfindungsgemäße Solarmoduleinrichtung 11 beschäftigt sich jedoch mit der Aufstellung am Boden oder alternativ mit einer Wandbefestigung.

Wie beispielhaft in den Figuren 1 und 2 dargestellt, besitzt das Solarmodul 12 einen Tragrahmen 14, der zur Halterung der Solarzellen 13 dient. Der Tragrahmen 14 besteht aus vier Rahmenabschnitten 15a-d, die gleichzeitig die Seitenränder des Solarmoduls 12 bilden. Es ist möglich, dass der Tragrahmen 14 einen Boden aufweist, auf dem die Solarzellen 13 gelagert sind. Alternativ ist es möglich, dass der Tragrahmen ohne Boden ausgestattet ist und über an den Rahmenabschnitten 15a - 15d angeordnete und nach innen ragende Halterungsstege verfügt, an denen eine in sich steife Solarzellen-Einheit gelagert ist.

Eine wichtige Komponente der Solarmoduleinrichtung 11 ist eine Konsole 16, zur Halterung des Solarmoduls 12. Die Konsole 16 ist mittels Lagermitteln am Tragrahmen 14 gelagert, derart, dass die Konsole 16 zwischen einer vom Tragrahmen 14 wegragenden Gebrauchsstellung 17 und einer an den Tragrahmen 14 herangeklappten Verstaulage 18 verstellbar ist.

Die Konsole 16 besteht aus mehreren Konsolenteilen 19a, 19b, die jeweils als Rohrprofile ausgebildet sind. Als Material eignet sich hier Stahl oder Leichtmetall, beispielsweise Aluminium.

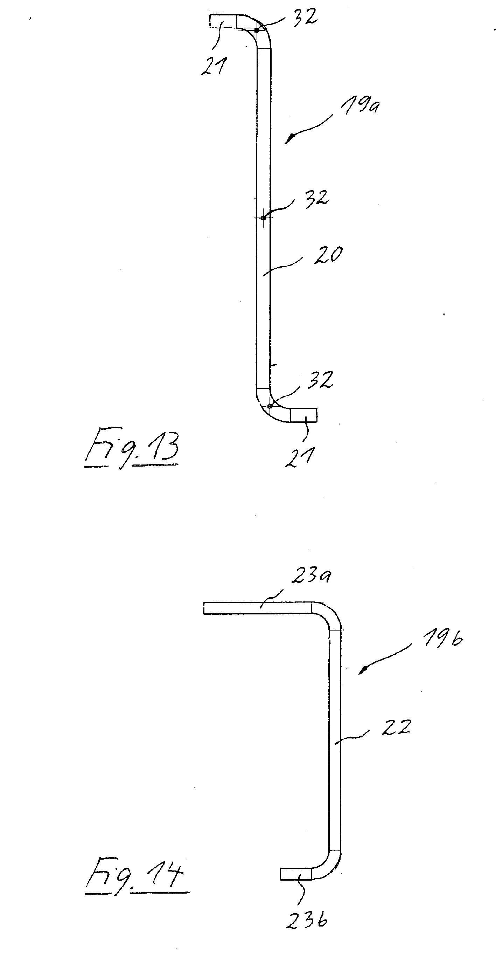

Die Konsolenteile 19a, 19b sind, wie in den Figuren 13 und 14 gezeigt, charakteristisch ausgestaltet. Es ist ein erstes Konsolenteil 19a vorgesehen, das einen langen Basisabschnitt 20 und zwei jeweils an den einander entgegengesetzten Enden des Basisabschnitts 20 ausgebildete, gekrümmte Endabschnitte 21 besitzt. Insgesamt ergibt sich eine in etwa S-förmige Gestalt des ersten Konsolenteils 19a. Die Endabschnitt 21 sind einstückig mit dem Basisabschnitt verbunden und können durch Biegeverformung aus dem Basisabschnitt 20 herausgebildet werden.

Die Figur 14 zeigt das zweite Konsolenteil 19b, das ebenfalls einen langen Basisabschnitt 21 aufweist, der jedoch im Vergleich zum Basisabschnitt 20 des ersten Konsolenteils kürzer ist. Das zweite Konsolenteil 19b verfügt über zwei einstückig mit dem Basisabschnitt 22 verbundene Endabschnitte 23, die jeweils gekrümmt sind. Im Gegensatz zu den Endabschnitten 21 des ersten Konsolenteils 19a weisen die Endabschnitte 23a, 23b des Basisabschnitts 22 des zweiten Konsolenteils 19b in dieselbe Richtung. Ferner sind die Endabschnitte 23a, 23b nicht wie bei den Endabschnitten 21 des ersten Konsolenteils 19a gleich lang ausgebildet, sondern ein erster Endabschnitt 23a ist deutlich länger als ein zweiter Endabschnitt 23b ausgebildet.

Wie insbesondere in den Figuren 1 und 2 dargestellt, befinden sich an den beiden vertikal orientierten Rahmenabschnitten 15a, 15c des Tragrahmens 14 jeweils eine erste und eine zweite Lagerschnittstelle 24, 25. Die beiden Lagerschnittstellen 24, 25 befinden sich in Höhenrichtung des Solarmoduls 12 entfernt voneinander, wobei sich die zweite Lagerschnittstelle 25 jeweils am unteren Ende des zugeordneten Rahmenabschnitts 15a, 15c befindet. Wie beispielhaft in den Figuren 1 und 2 dargestellt, besitzt die erste Lagerschnittstelle 24, die dem oberen Ende des Solarmoduls 12 zugeordnet ist, drei in Höhenrichtung übereinander angeordnete Lagerbohrungen 26a - 26c. Im Gegensatz hierzu besitzt die zweite Lagerschnittstelle 25 nur eine Lagerbohrung 27. Wie die Zusammenschau der Figuren 1 und 2 zeigt, sind erste und zweite Lagerschnittstellen 24, 25 spiegelsymmetrisch zu einer Mittelachse des Solarmoduls 12 an den beiden einander gegenüberliegenden Rahmenabschnitten 15a, 15c angeordnet.

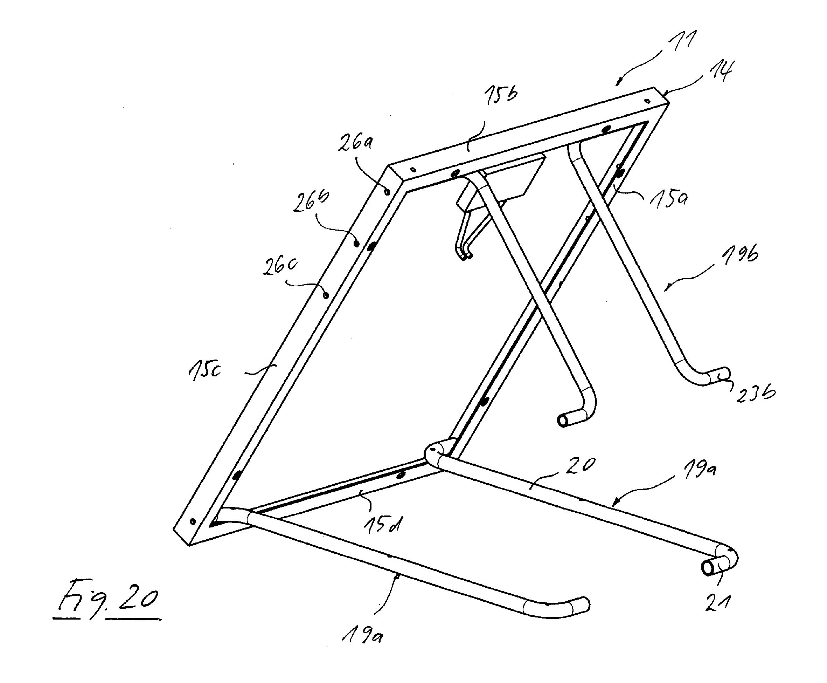

An den beiden ersten Lagerschnittstellen 24 sind jeweils spiegelsymmetrisch zur Mittelachse ausgerichtet, die langen Endabschnitte 23a des zweiten Konsolenteils 19b angeordnet und dort über die Lagermittel gelagert. Zu den Lagermitteln gehört ein durch die zugeordnete Lagerbohrung 26a hindurchführbares Feststellelement 28, das beispielhaft in Form einer Feststellschraube dargestellt ist. Die Feststellschraube besitzt einen Schraubenschaft (nicht dargestellt), der durch die Lagerbohrung 25a hindurchführbar ist und in das offene Ende des langen Endabschnitts 23a des zweiten Konsolenteils 19b eingeführt werden kann. Zweckmäßigerweise ist in den langen Endabschnitt 23a des zweiten Konsolenteils 19b eine Gewindehülse eingesetzt und dort befestigt, die mit einem Innengewinde ausgestattet ist, in das der Schraubenschaft der Feststellschraube eingeschraubt werden kann. Dadurch lässt sich das zweite Konsolenteil 19b an der zugeordneten ersten Lagerschnittstelle 24 befestigen. Ist die Feststellschraube nicht vollständig in die Gewindehülse eingeschraubt, so lässt sich das zweite Konsolenteil 19b um eine axial zur Längsachse der Feststellschraube ausgerichtete Schwenkachse verschwenken. Dadurch lässt sich das zweite Konsolenteil 19b, wie insbesondere in Figur 20 gezeigt, an den Tragrahmen 14 heranklappen oder von diesem wegschwenken.

Wie insbesondere in Figur 2 gezeigt, ist ein weiteres zweites Konsolenteil 19b an der am anderen Rahmenabschnitt 15c liegenden weiteren ersten Lagerschnittstelle 24 in gleicher Weise angebracht.

Das erste Konsolenteil 19a oder vielmehr die beiden ersten Konsolenteile 19a werden an der zweiten Lagerschnittstelle 25 am Tragrahmen 14 befestigt. Die zweite Lagerschnittstelle 25 besitzt lediglich eine einzelne Lagerbohrung 27, der ebenfalls, wie bei der ersten Lagerschnittstelle 24, ein Feststellelement in Form einer Feststellschraube zugeordnet ist. Zur Befestigung des ersten Konsolenteils 19a wird der Schraubenschaft der Feststellschraube durch die Lagerbohrung 27 durchgeführt und in eine am Endabschnitt 21 des ersten Konsolenteils 19a befindliche Gewindehülse eingeschraubt. Ist die Feststellschraube nicht festgeschraubt, so lässt sich das erste Konsolenteil 19a um eine in Axialrichtung zum Schraubenschaft ausgerichtete Schwenkachse vom Tragrahmen 14 wegschwenken oder an diesen heranklappen. Auch dies ist beispielhaft in Figur 20 gezeigt.

Wie insbesondere in Figur 1 und Figur 2 dargestellt, bildet der untere Rand des Solarmoduls, d.h. der untere Rahmenabschnitt 15b, gemeinsam mit den beiden spiegelsymmetrisch zueinander liegenden ersten Konsolenteilen 19a im ausgeklappten Zustand einen ersten Abstützabschnitt 29. Über diesen Abstützabschnitt 29 lässt sich die Solarmoduleinrichtung 11 an einer Bodenfläche aufstellen. Der erste Abstützabschnitt 29 kann jedoch auch zur Befestigung an einer Wandfläche (nicht dargestellt) verwendet werden.

Die beiden zweiten Konsolenteile 19b bilden gemeinsam mit dem oberen Ende, also dem oberen Rahmenabschnitt 15b, einen zweiten Abstützabschnitt 30, der alternativ zum ersten Abstützabschnitt 29 genutzt werden kann. Da die Basisabschnitte 20 der beiden ersten Konsolenteile 19a länger als die Basisabschnitte 22 der zweiten Konsolenteile 19b sind, lässt sich der Neigungswinkel bzw. Aufstellwinkel, d.h. der Winkel zwischen der Boden- bzw. Wandfläche und der Vorderseite des Solarmoduls 12 durch alternatives Nutzen des einen oder des anderen Abstützabschnitts 29, 30 verändern. Wird der längere erste Abstützabschnitt 29 verwendet, so ist die Ausrichtung des Solarmoduls weniger steil als bei Verwendung des zweiten Abstützabschnitts 30.

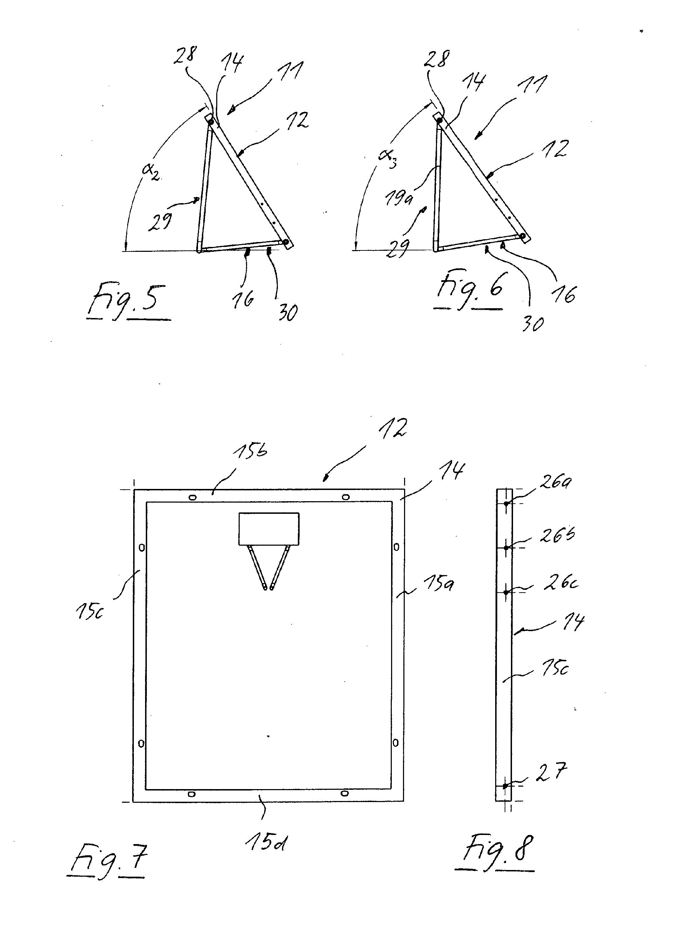

Wie insbesondere die Zusammenschau der Figuren 5 und 6 zeigt, lässt sich der Neigungswinkel auch durch alternative Nutzung des ersten oder zweiten Abstützabschnitts 29, 30 entweder für die Bodenaufstellung oder zur Wandbefestigung ändern.

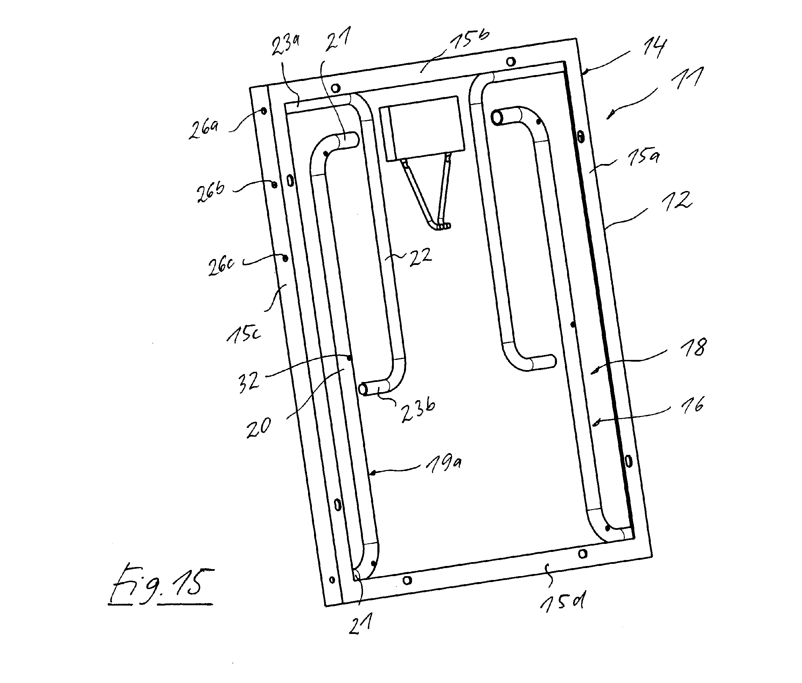

Wie insbesondere in Figur 15 gezeigt, sind die Konsolenteile 19a, 19b in der Verstaulage 18 an den Tragrahmen 14 herangeklappt. Dabei sind die Konsolenteile 19a, 19b voneinander getrennt, wodurch sie platzsparend nebeneinander positioniert werden können.

Die Figur 2 zeigt die Gebrauchsstellung 17, in der die Konsolenteile 19a, 19b herausgeklappt sind. Im Beispielsfalls bilden jeweils paarweise einander zugeordnete erste und zweite Konsolenteile 19a, 19b eine erste und eine zweite Konsolenhälfte 31a, 31b. Beim Herausklappen der Konsolenteile 19a, 19b werden die paarweise einander zugeordneten ersten und zweiten Konsolenteile 19a, 19b über Verbindungsmittel in Form von Steckverbindungsmittel miteinander verbunden. Zweckmäßigerweise werden die einander zugeordneten freien Enden des Endabschnitts 21 am ersten Konsolenteil 19a und am kürzeren Endabschnitt 23b des zweiten Konsolenteils 19b zusammengesteckt.

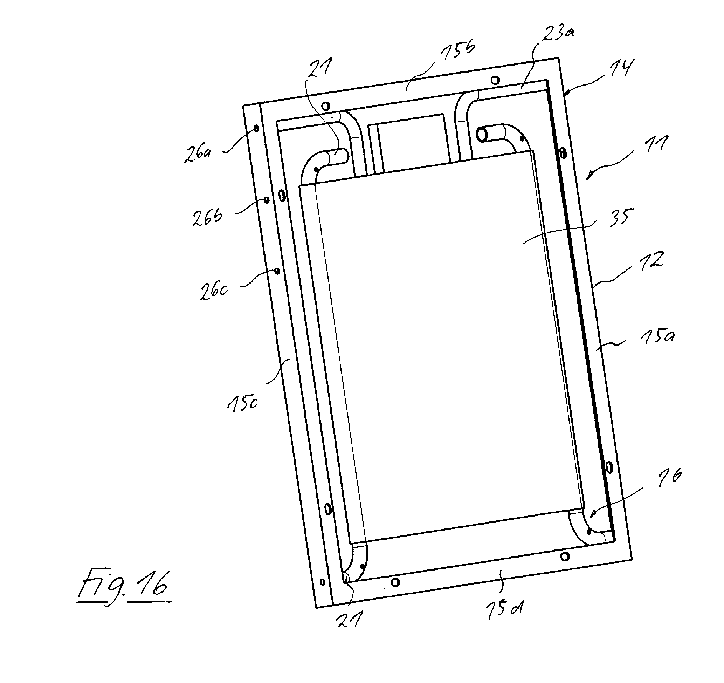

Figur 16 zeigt ein zweites Ausführungsbeispiel der erfindungsgemäßen Solarmoduleinrichtung 11. Das zweite Ausführungsbeispiel unterscheidet sich von dem zuvor beschriebenen ersten Ausführungsbeispiel dadurch, dass Beschwerungsmittel zur Erhöhung der Standfestigkeit der Konsole 16 vorgesehen sind. Als Beschwerungsmittel ist im Beispielsfall eine an der Konsole, insbesondere an den beiden parallel zueinander verlaufenden ersten Konsolenteilen 19a befestigbare Unterlage 35 vorgesehen, die mit Schüttgut und/oder Beschwerungselementen, beispielsweise Steinbrocken, beladen werden kann, womit die Standfestigkeit der Konsole 16 und somit der gesamten Solarmoduleinrichtung 11 deutlich erhöht wird.

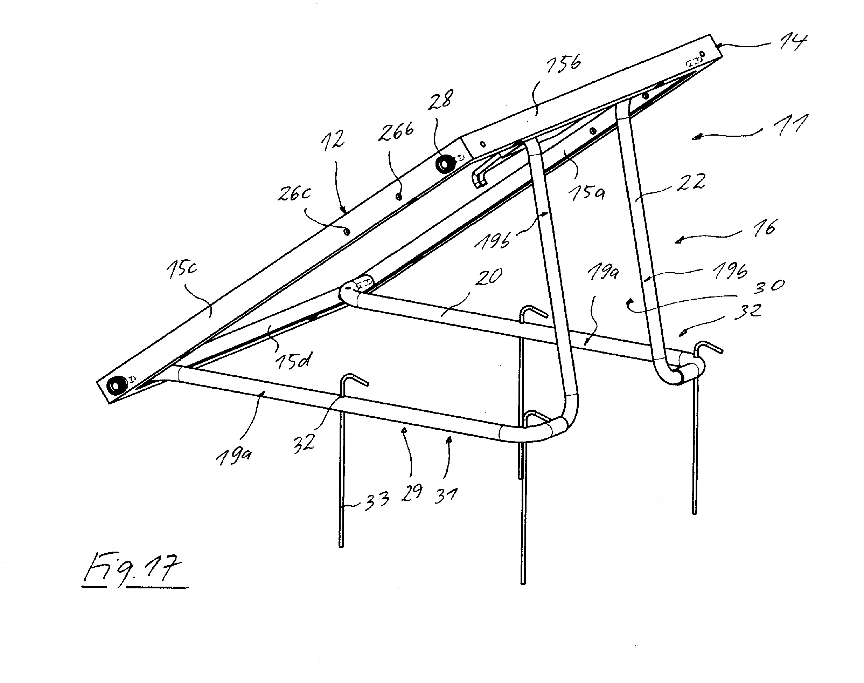

Die Figur 17 zeigt ein drittes Ausführungsbeispiel der erfindungsgemäßen Solarmoduleinrichtung, die hier Befestigungsmittel zu deren hängenden Befestigung an einer Montagefläche oder, wie im Beispielsfalls gezeigt, Fixierung an einer unbefestigten Bodenfläche aufweist. Im in Figur 17 dargestellten Beispielsfall umfassen die Befestigungsmittel an den Konsolenteilen, insbesondere an den beiden im Wesentlichen parallel zueinander verlaufenden ersten Konsolenteilen 19a Montagebohrungen 32, durch die hindurch Heringe 33 gesteckt und im unbefestigten Erdreich verankert werden können. Die Montagebohrungen 32 dienen alternativ auch zur hängenden Befestigung an einer Montagefläche, beispielsweise Wandfläche. In diesem Fall sind durch die Montagebohrungen Befestigungsschrauben hindurchzustecken und an der Montagefläche zu befestigen.

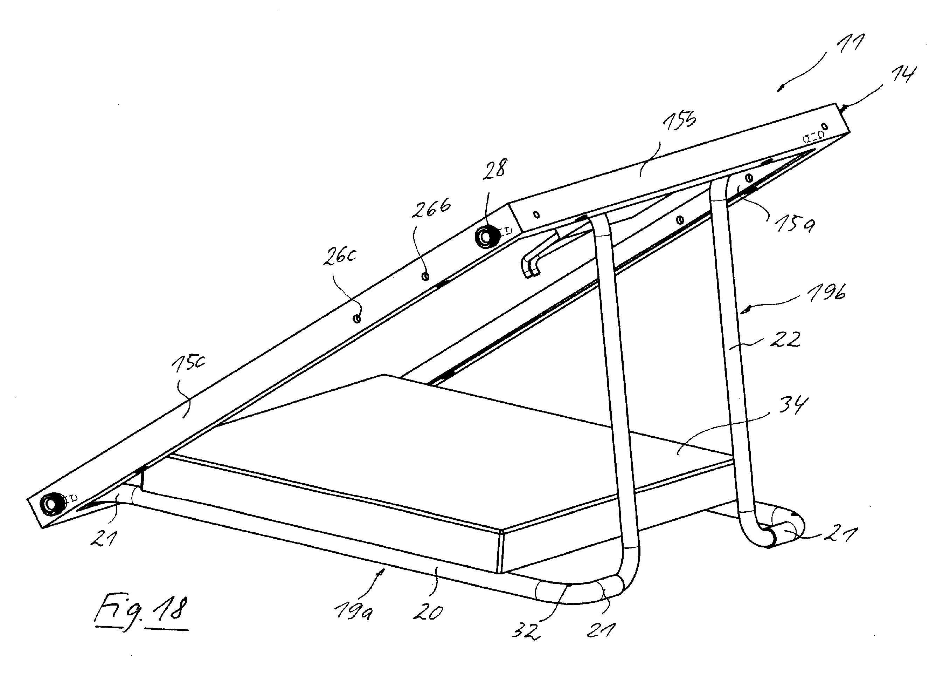

Die Figur 18 zeigt schließlich ein viertes Ausführungsbeispiel der erfindungsgemäßen Solarmoduleinrichtung 11, das sich von dem zuvor beschriebenen zweiten Ausführungsbeispiel dadurch unterscheidet, dass als Beschwerungsmittel eine auf den zur Abstützung genutzten Abstützabschnitt auflegbare Beschwerungsplatte 34 aufgesetzt und ggf. dort befestigt wird.

Die erfindungsgemäße Solarmoduleinrichtung 11 lässt sich in einfacher Weise von der in Figur 15 gezeigten Lage, bei der die Konsole 16 die Verstaulage 18 einnimmt, in die in den Figuren 1 und 2 oder 9 und 10 gezeigte Gebrauchsstellung 17 bringen. Dabei werden die einander paarweise zugeordneten Konsolenteile 19a, 19b ausgeklappt und zusammengesteckt. Je nachdem welcher Neigungswinkel des Solarmoduls 12 gewünscht ist, lässt sich die Solarmoduleinrichtung 11 auf den ersten oder alternativ auf den zweiten Abstützabschnitt 29, 30 stellen.

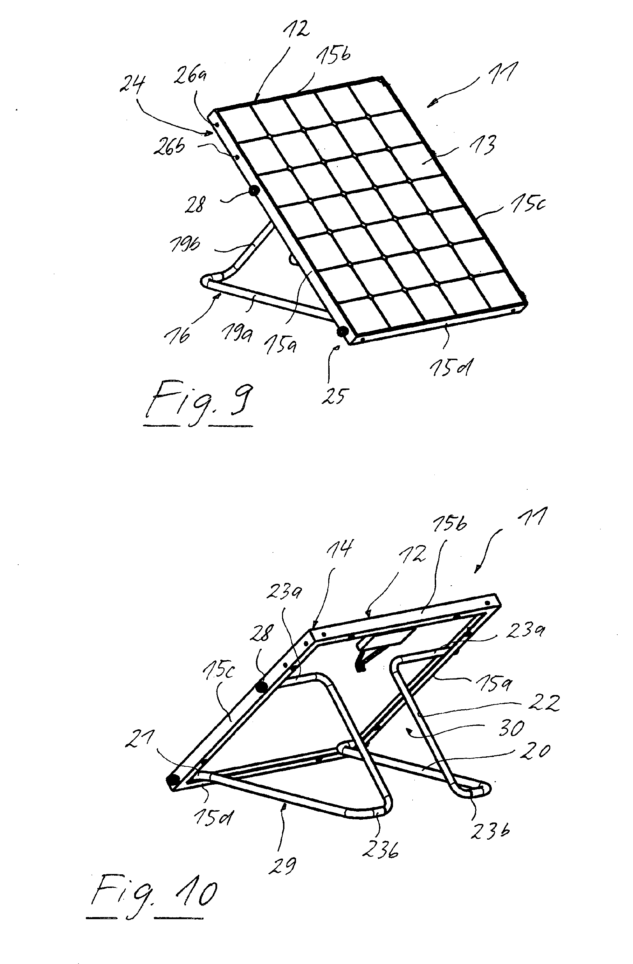

Eine andere Möglichkeit, den Neigungswinkel des Solarmoduls zu ändern, zeigt die Zusammenschau der Figuren 1, 2, 9 und 10. Im Gegensatz zu den Figuren 1 und 2 wird bei der in den Figuren 9 und 10 gezeigten Lage eine andere Lagerbohrung 26c an den jeweiligen ersten Schnittstellen 24 verwendet, wodurch die Winkellage der beiden Abstützabschnitte 29, 30 zueinander und daher auch der Neigungswinkel geändert wird. Im Beispielsfall wird eine Lagerbohrung 26c verwendet, die näher der zweiten Lagerschnittstelle 25 positioniert ist, so dass sich der Neigungswinkel des Solarmoduls 12 verringert.

## Patentansprüche

1. Solarmoduleinrichtung, mit wenigstens einem Solarmodul (12), das einen Tragrahmen (14) und mehrere durch den Tragrahmen (14) gehalterte Solarzellen (13) aufweist, und mit einer dem Tragrahmen (14) zugeordneten Konsole (16) zur Halterung des Solarmoduls (12), **dadurch gekennzeichnet, dass** die Konsole (16) mittels Lagermitteln am Tragrahmen (14) gelagert ist, derart, dass die Konsole (16) zwischen einer vom Tragrahmen (14) wegragenden Gebrauchsstellung (17) und einer an den Tragrahmen (14) herangeklappten Verstaulage (18) verstellbar ist.

2. Solarmoduleinrichtung nach Anspruch 1, **dadurch gekennzeichnet, dass** die Konsole (16) in der Gebrauchsstellung (17) winkelig zueinander angeordnete, alternativ nutzbare Abstützabschnitte (29, 30) zur Abstützung der Konsole (16) an einer Abstützfläche aufweist.

3. Solarmoduleinrichtung nach Anspruch 2, **dadurch gekennzeichnet, dass** von den Abstützabschnitten (29, 30) ein erster Abstützabschnitt (29) über die Lagermittel an einer ersten Lagerschnittstelle (24) am Tragrahmen (14) und ein zweiter Abstützabschnitt (30) über die Lagermittel an einer von der ersten Lagerschnittstelle (24) entfernten zweiten Lagerschnittstelle (25) gelagert ist.

4. Solarmoduleinrichtung nach einem der Ansprüche 2 oder 3, **dadurch gekennzeichnet, dass** die Abstützabschnitte (29, 30) unterschiedlich lang ausgebildet sind.

5. Solarmoduleinrichtung nach einem der Ansprüche 2 bis 4, **dadurch gekennzeichnet, dass** die Lagermittel derart ausgebildet sind, dass sich die Winkellage der Abstützabschnitte (29, 30) zueinander ändern lässt.

6. Solarmoduleinrichtung nach einem der vorhergehenden Ansprüche, **dadurch gekennzeichnet, dass** die Konsole (16) aus Profilelementen, insbesondere Rohrprofilen, aufgebaut ist.

7. Solarmoduleinrichtung nach einem der vorhergehenden Ansprüche, **dadurch gekennzeichnet, dass** die Konsole (16) mehrteilig aus mehreren Konsolenteilen (19a, 19b) aufgebaut ist, wobei die Konsolenteile (19a, 19b) in der Verstaulage (18) voneinander getrennt und an den Tragrahmen (14) herangeklappt sind und in der Gebrauchsstellung (17) ausgeklappt und mittels Verbindungsmitteln miteinander verbunden sind.

8. Solarmoduleinrichtung nach Anspruch 7, **dadurch gekennzeichnet, dass** die Verbindungsmittel als Steckverbindungsmittel ausgebildet sind, über die sich einander zugeordnete freie Enden der Konsolenteile (19a, 19b) zusammenstecken lassen.

9. Solarmoduleinrichtung nach Anspruch 8, **dadurch gekennzeichnet, dass** im Falle von aus Rohrprofilen ausgebildeten Konsolenteilen (19a, 19b) eines der beiden einander zugeordneten freien Enden der Konsolenteile (19a, 19b) in das andere freie Ende einsteckbar ist.

10. Solarmoduleinrichtung nach einem der Ansprüche 3 bis 9, **dadurch gekennzeichnet, dass** die Lagermittel pro Lagerschnittstelle (24, 25) wenigstens eine im Tragrahmen (14) ausgebildete Lagerbohrung (26a, -26c) und wenigstens ein durch die Lagerbohrung (26a - 26c) hindurchführbares und an einem Lagerende des zugeordneten Konsolenteils (19a, 19b) lösbar fixierbares Feststellelement (28) aufweist.

11. Solarmoduleinrichtung nach einem der Ansprüche 3 bis 10, **dadurch gekennzeichnet, dass** der Tragrahmen (14) aus mehreren Rahmenabschnitten (15a-d) gebildet ist, an denen an zwei einander gegenüberliegenden Rahmenabschnitten (15a, 15c) jeweils eine erste und eine zweite Lagerschnittstelle (24, 25) angeordnet sind, wobei jedem der mit den Lagerschnittstellen (24, 25) ausgestatteten Rahmenabschnitten (15a, 15c) eine aus jeweils zwei einander zugeordneten Konsolenteilen (19a, 19b) gebildete Konsolenhälfte (31a, 31b) der Konsole (16) zugeordnet ist.

12. Solarmoduleinrichtung nach einem der vorhergehenden Ansprüche, **dadurch gekennzeichnet, dass** der Konsole (16) Beschwerungsmittel zur Erhörung der Standfestigkeit zugeordnet sind.

13. Solarmoduleinrichtung nach Anspruch 12, **dadurch gekennzeichnet, dass** die Beschwerungsmittel eine auf den zur Abstützung genutzten Abstützabschnitt (29, 30) auflegbare Beschwerungsplatte (34) umfassen.

14. Solarmoduleinrichtung nach einem der Ansprüche 11 bis 13, durch gekennzeichnet, dass die Beschwerungsmittel eine an der Konsole (16) befestigbare Unterlage aufweisen, die mit Schüttgut und/oder Beschwerungselementen beladbar ist.

15. Solarmoduleinrichtung nach einem der vorhergehenden Ansprüche, **dadurch gekennzeichnet, dass** die Konsole (16) Befestigungsmittel zu deren hängenden Befestigung an einer Montagefläche und/oder Fixierung an einer unbefestigten Bodenfläche aufweist.
